# EUROPEAN PATENT APPLICATION

(11) **EP 4 661 449 A1**
(43) Date of publication of application: **10.12.2025**
(21) Application number: 24386069.9
(22) Date of filing: 07.06.2024
(51) Int. Cl.: H04W 4/90

(54) **CONNECTION REQUEST HANDLING**

(71) Applicant: Dräger Safety AG & Co. KGaA, 23560 Lübeck (DE)
(72) Inventor: Goutsos, Konstantinos, Blyth, Northumberland NE24 4RG (GB); Vardy, Thomas Eric, Howden, NE28 0QB (GB); Narsutis, Dainius, Blyth, Northumberland NE24 2PH (GB)
(74) Representative: Haseltine Lake Kempner LLP

(57) **Abstract**

There is provided a method for handling connection requests in a network. The method is performed by a first node of the network. The first node is deployed at an emergency response incident. The method comprises, in response to obtaining a first input, changing a state of the first node from a first state to a second state. The method comprises receiving, from a first wireless device deployed at the emergency response incident, a first request for information indicative of the state of the first node. The method comprises initiating transmission of a first response towards the first wireless device. The method comprises, in response to receiving a second request from the first wireless device, initiating a one-to-one connection to the first wireless device, and changing the state of the first node from the second state to the first state.

## Description

### Technical Field

The present disclosure relates to methods for handling connection requests in a network, and nodes and devices configured to operate in accordance with those methods.

### Background

Emergency services (e.g. fire services) are organisations that ensure public safety, security, and health by addressing and resolving different emergencies. As such, emergency services require every advantage possible when dealing with emergency response incidents. This is especially true as emergency services are required to respond to increasingly more complex incidents. Indeed, an emergency response incident can involve many individuals, including both responders and members of the public, and responders are commonly equipped with specialised equipment which must be carefully monitored and maintained in order to provide safety for the responders. For example, fire services regularly deal with toxic environments created by combustible materials, resulting in smoke, oxygen deficiency, elevated temperatures, poisonous atmospheres, and violent air flows. To combat some of these risks, firefighters carry breathing apparatus (BA). The proper management of such specialised equipment can mean the difference between a successful incident outcome and disaster.

Moreover, emergency services must be ready to adapt to an array of different environments (e.g. both natural and man-made), which cause further challenges with organising and effectively dealing with an incident. As such, ineffective management of such incidents can cause serious harm to the public and result in irreparable damage to infrastructure.

In the past, emergency services (e.g. fire services) have relied on analogue tools to monitor and control the handling of emergency response incidents. For example, an entry control operative (ECO) will commonly use a physical board (e.g. an entry control board (ECB)) for keeping track of fire fighters deployed at an incident (e.g. a building fire). In such a scenario, the ECO monitors the incident by physically organising the board with the help of "tallies", which visibly show the name of the fire fighter being deployed at the incident and the time at which said fire fighter entered the incident. Thus, the tallies can be physical elements which are added and removed from the board to allow the ECO to keep track of the personnel deployed at an incident. The addition of a physical tally to the board can act as an incident registration for the corresponding firefighter. In addition to the physical board, the ECO commonly utilises walkie-talkies to manually control the incident and receive updates on the condition of personnel.

In recent years, some emergency services have adopted telemetry techniques which provide for enhanced communication between the personnel deployed at an incident. Specifically, emergency services personnel can be provided with equipment which enables (e.g. wireless) communication with other personnel and provides for the sharing of information describing the status of a wearer of said equipment, and of the equipment itself. As such, emergency services personnel can be provided with equipment that enables the transmission of vital information in real time to an ECO, which gives the ECO more time to make tactical, and potentially lifesaving decisions. Therefore, techniques utilising enhanced communication provide a significant advantage for the overall safety of individuals involved in the incident and provides greater reassurance for responders during a deployment.

However, there exist certain challenges associated with current techniques for handling communications establishment between equipment deployed at an incident. Specifically, it must be ensured that the relevant equipment, and the corresponding communications between said equipment, is handled in a secure and correct manner. In particular, the management of the equipment deployed at the incident is often handled by specialised personnel who have specific knowledge and expertise of handling emergency response incidents. As such, only specific types of equipment should be allowed to interfere with the incident. More importantly, malicious and/or unauthorised devices need to be prevented from affecting the operation of incident management since such interference has the potential to cause serious harm or damage to the personnel involved in the incident, and/or the environment in which the incident is taking place.

### Summary

As mentioned above, there are certain challenges associated with existing techniques for handling communications establishment between equipment deployed at an incident. In particular, it is desirable to prevent an attacker, and/or nefarious or unauthorised devices from accessing equipment which is deployed at an emergency response incident. Such third party devices have the potential to negatively impact the handling of an emergency response system and thus cause danger to the personnel involved.

Therefore according to an aspect of the disclosure, there is provided a first method for handling connection requests in a network. The first method is performed by a first node of the network. The first node is deployed at an emergency response incident. The first method comprises, in response to obtaining a first input, changing a state of the first node from a first state to a second state. In the first state, the first node is unable to initiate a connection to a wireless device. In the second state, the first node is able to initiate a one-to-one connection to a wireless device. The first method comprises receiving, from a first wireless device deployed at the emergency response incident, a first request for information indicative of the state of the first node. The first method comprises initiating transmission of a first response towards the first wireless device. The first response comprises first information indicative that the state of the first node is the second state. The first method comprises, in response to receiving a second request from the first wireless device, initiating a one-to-one connection to the first wireless device, and changing the state of the first node from the second state to the first state. The second request is a request for the first wireless device to connect to the first node.

According to another aspect of the disclosure, there is also provided a second method for handling connection requests in a network. The second method is performed by a first wireless device deployed at an emergency response incident. The second method comprises initiating transmission of a first request towards a first node of a network. The first request is a request for information indicative of a state of the first node. The first node is deployed at the emergency response incident. The second method comprises receiving, from the first node, a first response comprising first information indicative that the state of the first node is a second state in which the first node is able to initiate a one-to-one connection to a wireless device. The second method also comprises, in response to receiving the first response from the first node, initiating transmission of a second request towards the first node, wherein the second request is a request for the first wireless device to connect to the first node.

According to another aspect of the disclosure, there is also provided a first node comprising processing circuitry configured to operate in accordance with the first method. In some embodiments, the first node may comprise at least one memory for storing instructions which, when executed by the processing circuitry, cause the first node to operate in accordance with the first method.

According to another aspect of the disclosure, there is also provided a first wireless device comprising processing circuitry configured to operate in accordance with the second method. In some embodiments, the first wireless device may comprise at least one memory for storing instructions which, when executed by the processing circuitry, cause the first wireless device to operate in accordance with the second method.

According to another aspect of the disclosure, there is provided a method performed by a system. The method comprises the first method described earlier, and the second method described earlier.

According to another aspect of the disclosure, there is provided a system comprising the first node as described earlier, and a first wireless device as described earlier.

According to another aspect of the disclosure, there is provided a computer program comprising instructions which, when executed by processing circuitry, cause the processing circuitry to perform any one or more of the first and second methods described earlier.

According to another aspect of the disclosure, there is provided a computer program product, embodied on a non-transitory machine-readable medium, comprising instructions which are executable by processing circuitry to cause the processing circuitry to perform any one or more of the first and second methods described earlier.

Thus, in the manner described above, improved techniques for handling connection requests in a network are provided. The techniques are improved since a first node deployed at an emergency response incident is advantageously configured with a first and second state which enables qualified initiation (e.g. authorisation) of a one-to-one connection to a wireless device. In particular, the first node can be configured to be in a first state in which the first node is unable to initiate a connection to a wireless device. The first node can remain in this first state until the first node obtains a first response which can trigger the first node to enter a second state in which the first node is able to initiate a one-to-one connection to a wireless device. In this way, the techniques described herein avoid nefarious and/or unauthorised devices from gaining access to the first node. This type of connection handling is especially useful as the first node is deployed at an emergency response incident and thus may be involved in potentially life threatening situations in which secure and reliable communication is required.

### Brief description of the drawings

For a better understanding of the techniques, and to show how they may be put into effect, reference will now be made, by way of example, to the accompanying drawings, in which:
Figure 1 is a block diagram illustrating a first node according to an embodiment;
Figure 2 is a block diagram illustrating a method performed by the first node according to an embodiment;
Figure 3 is a block diagram illustrating a first wireless device according to an embodiment;
Figure 4 is a block diagram illustrating a method performed by the first wireless device according to an embodiment; and
Figures 5 to 8 are block diagrams illustrating a method performed in a system according to some embodiments.

### Detailed Description

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

As mentioned above, there is provided herein techniques for handling connection requests in a network. The techniques described herein can be used in respect of any network, such as any communications or telecommunications network, e.g. cellular network. The network referred to herein may be a radio network. For example, the network referred to herein may be a 2.4GHz radio network. In some examples, the network may comprise a Wi-Fi network (e.g. based on the Institute of Electrical and Electronics Engineers (IEEE) 802.11 family of standards). Alternatively, or in addition, the network may comprise a Bluetooth network (e.g. based on the IEEE 802.15.1 family of standards).

Some of the techniques described herein are performed by a first node of a network. The first node referred to herein can be configured to route communications between a wireless device and a BA. Herein, the first node can be any entity of the network which can be configured to act as a transceiver between a wireless device and a BA. Thus, in some examples, the first node referred to herein may be configured to operate as a repeater device between different entities of the network referred to herein. The first node referred to herein can be configured to receive communications from the first wireless device referred to herein, and/or a BA . The first node referred to herein can be configured to initiate transmission of information towards the first wireless device referred to herein, and/or the BA. Herein, the term "initiate" can mean, for example, cause or establish. Thus, any reference to an entity (e.g. the first node) "initiating transmission" will be understood to mean that the entity (e.g. the processing circuitry of the entity) can be configured to itself transmit (e.g. via a communications interface of the entity) or can be configured to cause another entity to transmit. The first node can be referred to herein as a "hub" and/or a "base station (BS)" (e.g. of the network).

Some of the techniques described herein are performed by a first wireless device. A wireless device, as described herein, may be any type of wireless device. More specifically, a wireless device as referred to herein may be any device configured to communicate wirelessly with one or more other entities (e.g. of the network referred to herein). For example, the first wireless device may be a user equipment (UE). The first wireless device referred to herein can include, but is not limited to, a smart device such as a smartphone or a tablet. The first wireless device can be configured to run an application (or "app") which, for example, enables the wireless device to communicate with one or more other entities of the network. The application may provide a user of the first wireless device (e.g. an ECO) with the ability to manage and/or control an incident as described herein. The first wireless device may be configured to enable the user to create, edit and/or view incident information. For example, the first wireless device may be configured to enable the user of the first wireless device to view one or more BAs of the network (e.g. deployed at the incident). Alternatively, or in addition, the first wireless device may be configured to enable the user of the first wireless device to (re)configure the one or more BAs and/or the respective one or more wearers of the one or more BAs into groups (e.g. teams). The reconfiguration can comprise, for example, assigning and/or removing a BA, and/or a wearer of the BA, to and/or from a group respectively. As such, the incident can be controlled and managed (e.g. centrally) using the first wireless device.

As described herein, the first node referred to herein and the first wireless device referred to herein are deployed at an emergency response incident. Herein an emergency response incident may be any type of emergency response incident. More specifically, an emergency response incident may be any incident which involves the addressing and/or resolving of an emergency. An emergency, as referred to herein, can be an urgent, unexpected and/or dangerous situation that poses an immediate risk to health, life, property and/or environment. An emergency may require urgent intervention to prevent a worsening of the situation. Examples of the emergency response incident referred to herein include, but are not limited to, incidents which pose a danger to life, a danger to health, and/or a danger to the environment. For example, the emergency response incident referred to herein may include a fire related incident (e.g. a building fire, a forest fire, a car fire, etc.). Alternatively, or in addition, the emergency response incident referred to herein may involve hazardous material operations (e.g. dealing with substances which are a risk to health, safety, property, and/or the environment).

Some of the techniques described herein involve a breathing apparatus (BA). The breathing apparatus referred to herein can be configured to initiate transmission of information (e.g. signals) and/or receive information. For example, the BA referred to herein can be configured to initiate transmission of information towards the first node referred to herein. The BA referred to herein may be any type of BA. More specifically, the BA referred to herein may be any type of apparatus (e.g. device) which is worn by a wearer of the BA in order to provide a supply of breathable gas (e.g. air) to the wearer. As such, a BA can be advantageously utilised in an atmosphere that is immediately dangerous to life or health. In an example, the BA referred to herein may be a self-contained breathing apparatus (SCBA) and/or a compressed air breathing apparatus (CABA). The BA referred to herein may be a closed-circuit BA. Alternatively, the BA referred to herein may be an open-circuit BA.

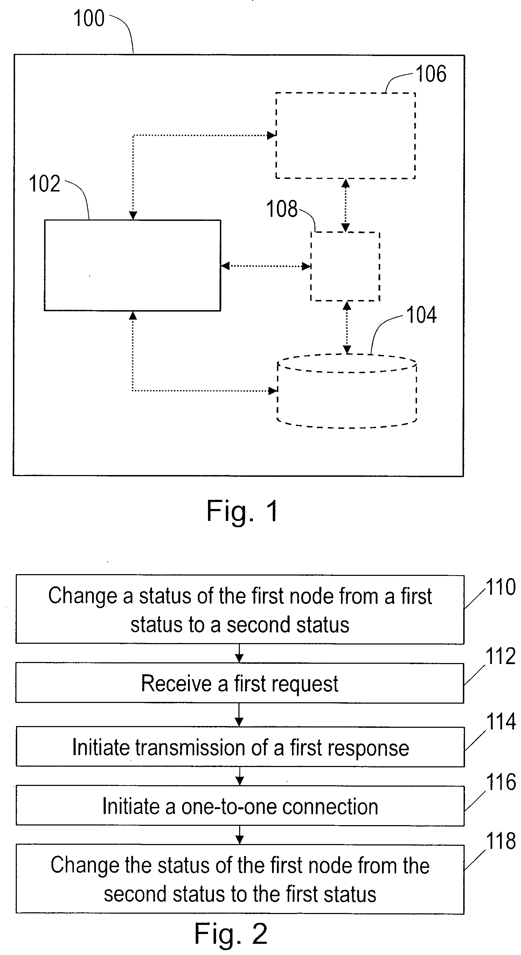

**Fig. 1** illustrates a first node 100 according to an embodiment. The first node 100 can be for handling connection requests in a network.

As illustrated in Fig. 1, the first node 100 comprises processing circuitry (or logic) 102. The processing circuitry 102 controls the operation of the first node 100 and can implement the method described herein in respect of the first node 100. The processing circuitry 102 can be configured or programmed to control the first node 100 in the manner described herein.

The processing circuitry 102 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the first node 100. In particular implementations, each of the one or more hardware components can be configured to perform, or is for performing, individual or multiple steps of the method described herein in respect of the first node 100. The processing circuitry 102 can be configured to run software to perform the method described herein in respect of the first node 100. The processing circuitry 102 can thus be implemented in numerous ways, with software and/or hardware, to perform the various functions described herein in respect of the first node 100.

Briefly, the processing circuitry 102 of the first node 100 is configured to, in response to obtaining a first input, change a state of the first node from a first state to a second state. In the first state, the first node is unable to initiate a connection to a wireless device. In the second state, the first node is able to initiate a one-to-one connection to a wireless device. The processing circuitry 102 of the first node 100 is also configured to receive, from a first wireless device deployed at the emergency response incident, a first request for information indicative of the state of the first node. The processing circuitry 102 of the first node 100 is also configured to initiate transmission of a first response towards the first wireless device. The first response comprises first information indicative that the state of the first node is the second state. The processing circuitry 102 of the first node 100 is also configured to, in response to receiving a second request from the first wireless device, initiate a one-to-one connection to the first wireless device, and change the state of the first node from the second state to the first state. The second request is a request for the first wireless device to connect to the first node.

As illustrated in Fig. 1, the first node 100 may optionally comprise a memory 104. Alternatively, the memory 104 may be external to (e.g. separate to or remote from) the first node 100. The memory 104 may comprise any type of non-transitory machine-readable medium, such as at least one cache or system memory. The memory 104 may comprise a volatile or a non-volatile memory. Examples of the memory 104 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 102 can be communicatively coupled (e.g. connected) to the memory 104. The processing circuitry 102 may be configured to communicate with and/or connect to the memory 104. The memory 104 may be for storing program code or instructions which, when executed by the processing circuitry 102, cause the first node 100 to operate in the manner described herein. For example, the memory 104 may be configured to store program code or instructions that can be executed by the processing circuitry 102 to cause the first node 100 to operate in accordance with the method described herein in respect of the first node 100. Alternatively or in addition, the memory 104 can be configured to store any information, data, messages, requests, responses, indications, notifications, signals, or similar, that are described herein. The processing circuitry 102 may be configured to control the memory 104 to store information, data, messages, requests, responses, indications, notifications, signals, or similar, that are described herein.

As illustrated in Fig. 1, the first node 100 may optionally comprise a user interface 106. The user interface 106 can be configured to render (or output, display, or provide) information required by or resulting from the method described herein. For example, the user interface 106 may be configured to render (or output, display, or provide) any information, data, messages, requests, responses, indications, notifications, signals, or similar, that are described herein. Alternatively or in addition, the user interface 106 can be configured to receive a user input. For example, the user interface 106 may allow a user to manually enter information or instructions, interact with, and/or control the first node 100. Thus, the user interface 106 may be a user interface that enables the rendering (or outputting, displaying, or providing) of information and/or that enables a user to provide a user input. For example, the user interface 106 may be configured to display incident information indicative of an evacuation order for personnel deployed at the incident.

The user interface 106 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 1, the first node 100 may optionally comprise a communications interface (or communications circuitry) 108. The communications interface 108 can be communicatively coupled (e.g. connected) to the processing circuitry 102, the memory 104, and/or the user interface 106. Although the communications interface 108 and the user interface 106 are illustrated as separate interfaces, in other embodiments, the communications interface 108 may be part of the user interface 106. The processing circuitry 102 may be configured to communicate with and/or connect to the communications interface 108. In some embodiments, the processing circuitry 102 can be configured to control the communications interface 108 to operate in the manner described herein. The communications interface 108 can be for enabling the first node 100, or components of the first node 100 (e.g. the processing circuitry 102, the memory 104, the user interface 106, and/or any other components of the first node 100), to communicate with and/or connect to each other and/or one or more other components.

For example, the communications interface 108 may be operable to allow the processing circuitry 102 to communicate with and/or connect to the memory 104 and/or vice versa. Similarly, the communications interface 108 may be operable to allow the processing circuitry 102 to communicate with and/or connect to the user interface 106 and/or vice versa. Similarly, the communications interface 108 may be operable to allow the processing circuitry 102 to communicate with and/or connect to any one or more other entities (e.g. the first wireless device) referred to herein. The communications interface 108 can be configured to transmit and/or receive information, data, messages, requests, responses, indications, notifications, signals, or similar, that are described herein. The processing circuitry 102 may be configured to control the communications interface 108 to transmit and/or receive information, data, messages, requests, responses, indications, notifications, signals, or similar, that are described herein.

The communications interface 108 may enable the first node 100, or components of the first node 100, to communicate and/or connect in any suitable way. For example, the communications interface 108 may enable the first node 100, or components of the first node 100, to communicate and/or connect wirelessly, via a wired connection, or via any other communication (or data transfer) mechanism. In some wireless implementations, for example, the communications interface 108 may enable the first node 100, or components of the first node 100, to use radio frequency (RF), Wi-Fi, Bluetooth, or any other wireless communication technology to communicate and/or connect. In some examples, the communications interface 108 may comprise a proprietary radio module.

Although the first node 100 is illustrated in Fig. 1 as comprising a single memory 104, it will be appreciated that the first node 100 may comprise at least one memory (i.e. a single memory or a plurality of memories) 104 that operate in the manner described herein. Similarly, although the first node 100 is illustrated in Fig. 1 as comprising a single user interface 106, it will be appreciated that the first node 100 may comprise at least one user interface (i.e. a single user interface or a plurality of user interfaces) 106 that operate in the manner described herein. Similarly, although the first node 100 is illustrated in Fig. 1 as comprising a single communications interface 108, it will be appreciated that the first node 100 may comprise at least one communications interface (i.e. a single communications interface or a plurality of communications interfaces) 108 that operate in the manner described herein. It will also be appreciated that Fig. 1 only shows the components required to illustrate an embodiment of the first node 100 and, in practical implementations, the first node 100 may comprise additional or alternative components to those shown.

**Fig. 2** illustrates a method according to an embodiment. The method is for handling connection requests in a network. The first node 100 described earlier with reference to Fig. 1 can be configured to operate in accordance with the method of Fig. 2. For example, the method can be performed by or under the control of the processing circuitry 102 of the first node 100. The method as described with reference to Fig. 2 may be a computer-implemented method.

With reference to Fig. 2, at block 110, in response to obtaining a first input, a state of the first node 100 is changed from a first state to a second state. More specifically, the first node 100 (e.g. the processing circuitry 102 of the first node 100) changes the state of the first node 100. In the first state, the first node is unable to initiate a connection to a wireless device. In the second state, the first node is able to initiate a one-to-one connection to a wireless device.

The state of the first node 100 may be a connectivity state and/or a device connectivity state. As such, the state of the first node 100 may be indicative of whether the first node 100 is able to initiate a connection with a wireless device. As mentioned herein, in the first state, the first node 100 is unable to initiate a connection to a wireless device (e.g. the first wireless device referred to herein). Therefore, in some examples, the first node 100 may be prevented from initiating any connections to any wireless devices while the state of the first node 100 is the first state. In some examples, the state of the first node 100 may be configured as the first state by the first node 100 configuring the communications interface 108 of the first node 100 to prevent any external connections. The communications interface 108 of the first node 100 can be referred to herein as a wireless (e.g. radio) module according to some examples. In some examples, the first node 100 may configure one or more rules for handling connections in the network. In some of these examples, changing the state of the first node 100 from the second state to the first state can comprise changing the one or more rules (e.g. a rule set) from "allow" to "none".

As mentioned herein, in the second state, the first node 100 is able to initiate a one-to-one connection to a wireless device. Therefore, in some examples, the first node 100 can initiate (e.g. establish) a one-to-one connection to a wireless device in the second state. In some examples, the state of the first node 100 may be configured as the state by the first node 100 configuring the communications interface 108 of the first node 100 to allow an external connection. In some examples, the first node 100 may configure one or more rules for handling connections in the network. In some of these examples, changing the state of the first node 100 from the first state to the second state can comprise changing the one or more rules (e.g. a rule set) from "none" to "allow". Entering the second state of the first node 100 can comprise the first node 100 (re)configuring the network to become available for a (e.g. external) wireless device to connect to it.

The one-to-one connection referred to herein can be a unique connection that the first node 100 has with a single wireless device (e.g. of a plurality of wireless devices). As such, in some examples, the first node 100 may only communicate and/or be linked with one wireless device as referred to herein. In some examples, the one-to-one connection referred to herein may correspond to a unique connection that the first node 100 has with a wireless device configured to run an application. It will be understood that a wireless device, as referred to herein, may not comprise a BA as referred to herein. As such, the initiation, establishment, and/or maintenance of a one-to-one connection between the first node 100 and a wireless device (e.g. the first wireless device referred to herein) may not prohibit the ability of the first node 100 to connect to one or more BAs as defined herein. The one-to-one connection can enable the first node 100 to authorise a single (e.g. mobile) wireless device to communicate with the first node 100 (e.g. to allow the wireless device to receive information about the emergency response incident, and/or to control the emergency response incident).

In some examples, the first input mentioned above may be obtained via a user interface of the first node 100 (e.g. the user interface 106 of the first node 100). For example, obtaining the first input may comprise a button being pressed on the first node 100 (e.g. by a user). Therefore, in some examples, a user may need to physically interact with the first node 100 in order to initiate a connection of the first node 100 to a wireless device. Obtaining the first input can trigger the first node 100 to enter the second state as defined herein. Obtaining the first input in the manner described above can increase the level of security provided by the method as described with reference to Fig. 2. For example, in scenarios in which obtaining the first input comprises a button being pressed on the first node 100, an authorised party would be required to gain physical access to the first node 100.

As illustrated by block 112 of Fig. 2, a first request is received from a first wireless device deployed at the emergency response incident. The first request is a request for information indicative of the state of the first node 100. More specifically, the first node 100 (e.g. the processing circuitry 102 of the first node 100) receives the first request from the first wireless device (e.g. via the communications interface 108 of the first node 100).

As illustrated by block 114 of Fig. 2, transmission of a first response is initiated towards the first wireless device. More specifically, the first node 100 (e.g. the processing circuitry 102 of the first node 100) initiates transmission of the first response (e.g. via the communications interface 108 of the first node 100). The first response comprises first information indicative that the state of the first node is the second state. Therefore, the wireless device can be made aware that the first node 100 is able to initiate a one-to-one connection as defined herein.

As illustrated by block 116 of Fig. 2, in response to receiving a second request from the first wireless device, a one-to-one connection to the first wireless device is initiated. More specifically, the first node 100 (e.g. the processing circuitry 102 of the first node 100) initiates the one-to-one connection to the first wireless device. The second request is a request for the first wireless device to connect to the first node 100.

As illustrated by block 118 of Fig. 2, in response to receiving the second request from the first wireless device, the state of the first node 100 is changed from the second state to the first state. More specifically, the first node 100 (e.g. the processing circuitry 102 of the first node 100) changes the state of the first node 100 from the second state to the first state. As such, in some examples, once the one-to-one connection to the first wireless device is initiated, the first node 100 can change the state of the first node 1 00from the second state to the first state, as defined herein. As such, the first node 100 can prevent any further connection establishment to another wireless device.

Although not illustrated in Fig. 2, in some examples the method may comprise starting a timer in response to obtaining the first input. Therefore, in some examples, obtaining the first input (e.g. receiving a button push) can trigger the starting of the timer (e.g. countdown). The timer can correspond to a (e.g. set) period of time (e.g. 2s, 5s, 10s, 20s, 30s, etc.). The period of time may be preconfigured and/or stored at the first node 100. In some examples, the one-to-one connection to the first wireless device may only be initiated if the second request is received before the timer elapses.

Although also not illustrated in Fig. 2, in some examples, if the timer elapses before the second request is received, the method may comprise truncating the method to omit the step of initiating the one-to-one connection to the first wireless device. As such, if the timer elapses before receiving the second request, as defined herein, the first node 100 may not establish the one-to-one connection to the first wireless device 200. Therefore, in some examples, obtaining the first input can start a countdown timer for a period of time in which the first wireless device is allowed to initiate a connection to the first node 100. If the connection procedure is not completed (e.g. the one-to-one connection to the first wireless device is not initiated) within the (e.g. predefined) period of time, the first node 10 can change its state from the second state to the first state (e.g. to prevent any external connections to a wireless device).

In some examples, the second request may comprise an identifier of the first wireless device. The identifier of the first wireless device may be unique to the first wireless device. in some examples, the identifier of the first wireless device may be a media access control (MAC) address. Therefore, the identifier of the first wireless device can be a unique alphanumeric attribute that can be used to identify the first wireless device.

In some examples, the identifier of the first wireless device may be generated by the first wireless device, as described herein. Alternatively, in some examples, the identifier of the first wireless device may be generated by a cloud entity.

In some examples, initiating the one-to-one connection to the first wireless device may comprise storing the identifier of the first wireless device (e.g. in the memory 104 of the first node 100). In some examples, the first node 100 may configure a connection policy of the first node 100 to only approve connection requests associated with (e.g. comprising) the (e.g. stored) identifier of the first wireless device. For example, the first node 100 may reconfigure a wireless module of the first node 100 to allow only the identifier of the first wireless device (e.g. the MAC address). In some examples, initiating the one-to-one connection to the first wireless device may comprise initiating transmission of a second response to the first wireless device. The second response can comprise second information indicative that the identifier of the first wireless device has been accepted (e.g. by the first node 100). The second information can therefore be indicative that the first node 100 has authorised the first wireless device to connect to the first node 100. Once the one-to-one connection has been initiated, the first wireless device may be able to manage and/or control the emergency response incident via the first node 100.

Although not illustrated in Fig. 2, in some examples the method may comprise powering on in response to obtaining a second input. Therefore, in some examples, the first node 100 may be powered on in response to obtaining a second input. In some examples, the second input mentioned above may be obtained via a user interface of the first node 100 (e.g. the user interface 106 of the first node 100). For example, obtaining the second input may comprise a power button being pressed on the first node 100 (e.g. by a user). In some examples, the state of the first node 100 may be set to the first state in response to powering on. More specifically, the first node 100 (e.g. the processing circuitry 102 of the first node) can be configured to set the state of the first node 100 to the first state in response to powering on (e.g. being turned on). Therefore, in some examples, obtaining the second input can trigger the first node 100 to enter the first state as defined herein.

In some examples, the first node 100 may be configured to transmit third information towards the first wireless device. As mentioned herein, the first node 100 may be configured to act as a transceiver. The third information may be received from one or more breathing apparatus (BA) deployed at the emergency response incident. Therefore, in some examples, the first node 100 can act as a transceiver between the one or more BA and the first wireless device.

As mentioned herein, in some examples the network may comprise a radio network.

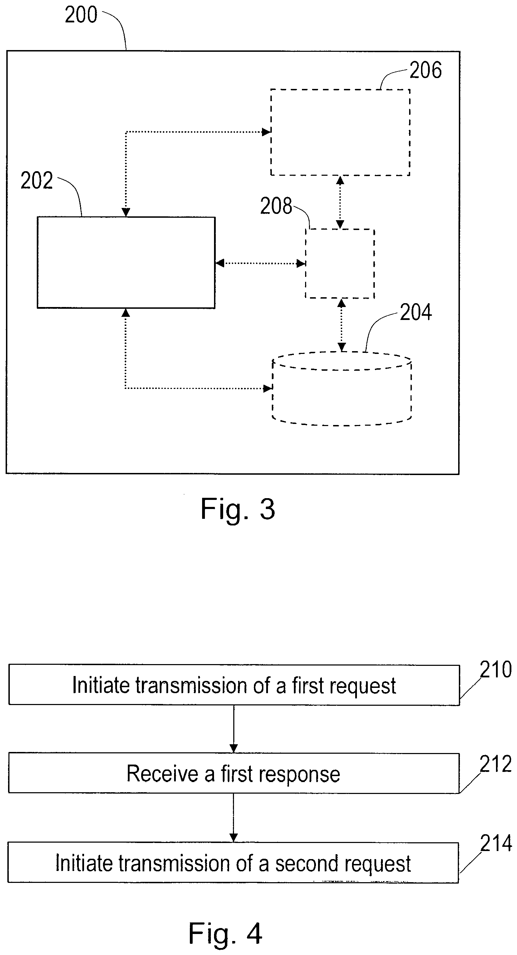

**Fig. 3** illustrates a first wireless device 200 according to an embodiment. The first wireless device 200 can be for handling connection requests in a network.

As illustrated in Fig. 3, the first wireless device 200 comprises processing circuitry (or logic) 202. The processing circuitry 202 controls the operation of the first wireless device 200 and can implement the method described herein in respect of the first wireless device 200. The processing circuitry 202 can be configured or programmed to control the first wireless device 200 in the manner described herein.

The processing circuitry 202 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the first wireless device 200. In particular implementations, each of the one or more hardware components can be configured to perform, or is for performing, individual or multiple steps of the method described herein in respect of the first wireless device 200. The processing circuitry 202 can be configured to run software to perform the method described herein in respect of the first wireless device 200. The processing circuitry 202 can thus be implemented in numerous ways, with software and/or hardware, to perform the various functions described herein in respect of the first wireless device 200.

Briefly, the processing circuitry 202 of the first wireless device 200 is configured to, initiate transmission of a first request towards a first node 100 of a network. The first request is a request for information indicative of a state of the first node. The first node 100 is deployed at the emergency response incident. The processing circuitry 202 of the first wireless device 200 is also configured to receive, from the first node 100, a first response comprising first information indicative that the state of the first node 10 is a second state in which the first node 100 is able to initiate a one-to-one connection to a wireless device. The processing circuitry 202 of the first wireless device 200 is also configured to, in response to receiving the first response from the first node 100, initiate transmission of a second request towards the first node 100. The second request is a request for the first wireless device 200 to connect to the first node 100.

As illustrated in Fig. 3, the first wireless device 200 may optionally comprise a memory 204. Alternatively, the memory 204 may be external to (e.g. separate to or remote from) the first wireless device 200. The memory 204 may comprise any type of non-transitory machine-readable medium, such as at least one cache or system memory. The memory 204 may comprise a volatile or a non-volatile memory. Examples of the memory 204 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 202 can be communicatively coupled (e.g. connected) to the memory 204. The processing circuitry 202 may be configured to communicate with and/or connect to the memory 204. The memory 204 may be for storing program code or instructions which, when executed by the processing circuitry 202, cause the first wireless device 200 to operate in the manner described herein. For example, the memory 204 may be configured to store program code or instructions that can be executed by the processing circuitry 202 to cause the first wireless device 200 to operate in accordance with the method described herein in respect of the first wireless device 200. Alternatively or in addition, the memory 204 can be configured to store any information, data, messages, requests, responses, indications, notifications, signals, or similar, that are described herein. The processing circuitry 202 may be configured to control the memory 204 to store information, data, messages, requests, responses, indications, notifications, signals, or similar, that are described herein.

As illustrated in Fig. 3, the first wireless device 200 may optionally comprise a user interface 206. The user interface 206 can be configured to render (or output, display, or provide) information required by or resulting from the method described herein. For example, the user interface 206 may be configured to render (or output, display, or provide) any information, data, messages, requests, responses, indications, notifications, signals, or similar, that are described herein. Alternatively or in addition, the user interface 206 can be configured to receive a user input. For example, the user interface 206 may allow a user to manually enter information or instructions, interact with, and/or control the first wireless device 200. Thus, the user interface 206 may be a user interface that enables the rendering (or outputting, displaying, or providing) of information and/or that enables a user to provide a user input. For example, the user interface 206 may be configured to display incident information indicative of an evacuation order for personnel deployed at the incident.

The user interface 206 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 3, the first wireless device 200 may optionally comprise a communications interface (or communications circuitry) 208. The communications interface 208 can be communicatively coupled (e.g. connected) to the processing circuitry 202, the memory 204, and/or the user interface 206. Although the communications interface 208 and the user interface 206 are illustrated as separate interfaces, in other embodiments, the communications interface 208 may be part of the user interface 206. The processing circuitry 202 may be configured to communicate with and/or connect to the communications interface 208. In some embodiments, the processing circuitry 202 can be configured to control the communications interface 208 to operate in the manner described herein. The communications interface 208 can be for enabling the first wireless device 200, or components of the first wireless device 200 (e.g. the processing circuitry 202, the memory 204, the user interface 206, and/or any other components of the first wireless device 200), to communicate with and/or connect to each other and/or one or more other components.

For example, the communications interface 208 may be operable to allow the processing circuitry 202 to communicate with and/or connect to the memory 204 and/or vice versa. Similarly, the communications interface 208 may be operable to allow the processing circuitry 202 to communicate with and/or connect to the user interface 206 and/or vice versa. Similarly, the communications interface 208 may be operable to allow the processing circuitry 202 to communicate with and/or connect to any one or more other entities (e.g. the first node) referred to herein. The communications interface 208 can be configured to transmit and/or receive information, data, messages, requests, responses, indications, notifications, signals, or similar, that are described herein. The processing circuitry 202 may be configured to control the communications interface 208 to transmit and/or receive information, data, messages, requests, responses, indications, notifications, signals, or similar, that are described herein.

The communications interface 208 may enable the first wireless device 200, or components of the first wireless device 200, to communicate and/or connect in any suitable way. For example, the communications interface 208 may enable the first wireless device 200, or components of the first wireless device 200, to communicate and/or connect wirelessly, via a wired connection, or via any other communication (or data transfer) mechanism. In some wireless implementations, for example, the communications interface 208 may enable the first wireless device 200, or components of the first wireless device 200, to use radio frequency (RF), Wi-Fi, Bluetooth, or any other wireless communication technology to communicate and/or connect. In some examples, the communications interface 208 may comprise a proprietary radio module.

Although the first wireless device 200 is illustrated in Fig. 3 as comprising a single memory 204, it will be appreciated that the first wireless device 200 may comprise at least one memory (i.e. a single memory or a plurality of memories) 204 that operate in the manner described herein. Similarly, although the first wireless device 200 is illustrated in Fig. 3 as comprising a single user interface 206, it will be appreciated that the first wireless device 200 may comprise at least one user interface (i.e. a single user interface or a plurality of user interfaces) 206 that operate in the manner described herein. Similarly, although the first wireless device 200 is illustrated in Fig. 3 as comprising a single communications interface 208, it will be appreciated that the first wireless device 200 may comprise at least one communications interface (i.e. a single communications interface or a plurality of communications interfaces) 208 that operate in the manner described herein. It will also be appreciated that Fig. 3 only shows the components required to illustrate an embodiment of the first wireless device 200 and, in practical implementations, the first wireless device 200 may comprise additional or alternative components to those shown.

**Fig. 4** illustrates a method according to an embodiment. The method is for handling connection requests in a network. The first wireless device 200 described earlier with reference to Fig. 3 can be configured to operate in accordance with the method of Fig. 4. For example, the method can be performed by or under the control of the processing circuitry 202 of the first wireless device 200. The method as described with reference to Fig. 4 may be a computer-implemented method.

With reference to Fig. 4, at block 210, transmission of a first request is initiated towards a first node 100 of a network. More specifically, the first wireless device 200 (e.g. the processing circuitry 202 of the first wireless device 200) initiates transmission of the first request (e.g. via the communications interface 208 of the first wireless device 200). Thus, the first node 100 can receive the first request from the first wireless device 200. The first request is a request for information indicative of a state of the first node 100, as defined herein. As also defined herein, the first node 100 is deployed at the emergency response incident.

The method performed by the first wireless device 200 (e.g. as described with reference to Fig. 4) may be performed in response to the wireless device 200 being powered on (e.g. turned on). Alternatively, or in addition, the method performed by the first wireless device 200 may be performed in response to an (e.g. software) application running on the first wireless device 200 being started (e.g. by a user of the first wireless device 200). For example, the application (e.g. at startup) may aim to establish connection to the first node 100 (e.g. software) via a wireless connection and request the status of the first node 100.

As illustrated by block 212 of Fig. 4, a first response is received from the first node 100. More specifically, the first wireless device 200 (e.g. the processing circuitry 202 of the first wireless device 200) receives the first response (e.g. via the communications interface 208 of the first wireless device 200). The first response comprises first information indicative that the state of the first node 100 is a second state in which the first node is able to initiate a one-to-one connection to a wireless device, as defined herein. In some examples, the first information may be indicative that the first node 100 is waiting for information to complete authorisation (e.g. of a connection to a wireless device).

As illustrated by block 214 of Fig. 4, in response to receiving the first response from the first node 100, transmission of a second request is initiated towards the first node 100. More specifically, the first wireless device 200 (e.g. the processing circuitry 202 of the first wireless device 200) initiates transmission of the second request (e.g. via the communications interface 208 of the first wireless device 200). Thus, the first node 100 can receive the second request from the first wireless device 200. The second request is a request for the first wireless device 200 to connect to the first node 100. In some examples, the second request may comprise an identifier (e.g. MAC address) of the first wireless device 200 as defined herein. In some examples, the identifier of the first wireless device 200 may be a hash (e.g. value). The application running on the first wireless device 200 may obtain (e.g. retrieve) the identifier of the first wireless device 200. In some examples, the application running on the first wireless device 200 may initiate transmission of the second request.

The identifier of the first wireless device 200 can be used to verify that the (e.g. application running on the) first wireless device 200 is of suitable origin for one or more commands and/or requests to be accepted and/or processed by the (e.g. application running on the) first node 100. Verification of the (e.g. app running on the) first wireless device 200 can be referred to herein as a "software layer authorisation".

In some examples, the identifier of the first wireless device 200 may be generated by the first wireless device 200. For example, in scenarios in which the identifier of the first wireless device 200 is a hash (e.g. value) the (e.g. application running on the) first wireless device 200 may generate the hash. The hash can be unique to the first wireless device 200. The hash can be generated in a manner that makes the hash identifiable by the first node 100. In other words, the hash may enable the first node 100 to determine that the hash corresponds to a valid origin (e.g. the application running on the first wireless device 200).

The hash referred to herein may be a generated value. In some examples, the hash may be generated using a hash function. A hash function can be described as a mathematical primitive configured to uniquely map a large input space to a, relatively, small output space. Generation of the hash by the hash function may be based on one or more inputs. The one or more inputs can, for example, correspond to one or more characteristics and/or identifiers of the first wireless device 200. The hash referred to herein may be an output (e.g. value) of the hash function generated based on the one or more inputs.

In some examples, the one or more inputs can comprise an (e.g. mobile) application number. The application number can, for example, be a number that (e.g. uniquely) corresponds to the application running on the first wireless device 200. For example, the application number can be a version number corresponding to the application running on the first wireless device 200. In some examples, the one or more inputs can comprise (e.g. mobile) application binary data. The application binary data can comprise data indicative of (e.g. a snapshot of) an installation location of the application running on the first wireless device 200. In some examples, the application binary data may exclude transient data and/or user data. In some examples, the one or more inputs may comprise a secret identifier. The secret identifier may be generated by an owner and/or developer of the application running on the first wireless device 200. For example, the secret identifier may be a private cryptographic key. In some examples, the one or more inputs may comprise information indicative of one or more features of the application running on the first wireless device 200. The one or more features may comprise a supported, enabled, and/or licensed feature of the application running on the first wireless device 200.

As mentioned herein, the hash (e.g. value) may be an output of the hash function generated based on the one or more inputs referred to herein. The hash may be utilised in a number of ways. For example, the first node 100 may verify the application running on the first wireless device 200 based on the hash. For example, the first node 100 can verify that the application running on the first wireless device 200 is valid and/or approved (e.g. by a supplier of the first node 100), before allowing any interaction with the first wireless device 200. In some examples, the first node 100 may enable and/or disable specific functionality for the first wireless device 200 based on the hash. For example, the first node 100 can enable and/or disable features for the application running on the first wireless device 200 based on (e.g. licensing) information comprised in the hash.

In some examples, the identifier of the first wireless device 200 may be generated by a cloud entity. In these examples, although not illustrated in Fig. 4, the method may comprise initiating transmission of a third request towards the cloud entity. The third request can a request for the cloud entity to generate the identifier. Although also not illustrated in Fig. 4, in some examples, the method may comprise receiving a third response from the cloud entity. The third response may comprise the identifier. Therefore, in some examples, in scenarios in which the identifier of the first wireless device 200 is a hash (e.g. value) the cloud entity may generate the hash.

Although not illustrated in Fig. 4, in some examples, a second response may be received from the first node 100. The second response can comprise second information indicative that the identifier of the first wireless device 200 has been accepted (e.g. by the first node 100). As such, in some examples, the first node 100 may validate and process the identifier (e.g. hash) before returning the second response to the (e.g. application running on the) wireless device 200. The second response may comprise information indicating that the first node 100 has established a one-to-one connection with the first wireless device 200.

In some examples, any subsequent communications between the first node 100 and the first wireless device 200 may comprise the identifier (e.g. unique hash) of the first wireless device 200. As such, the first node 100 can verify (e.g. validate) subsequent communications for the first wireless device 200. Therefore, in the event that a different (e.g. application running on a) wireless device attempts to communicate with the first node 100, the authorisation process described herein may need to be performed again in respect of the different wireless device.

As mentioned herein, in some examples, the first node 100 can be configured to transmit third information towards the first wireless device 200. The third information can be received from one or more breathing apparatus deployed at the emergency response incident referred to herein.

Therefore, in the manner described above, there is provided improved techniques for handling connection requests in a network. In more detail, the improved techniques allow for a first node 100 (e.g. base station) deployed at an emergency response incident to authorise a single wireless device (e.g. physical mobile device) to communicate with the first node 100. Such a technique is advantageous in emergency response incidents, as a one-to-one connection established between a first node 100 and a first wireless device 200 ensures that important information (e.g. status updates on emergency services personnel, and/or commands/instructions) can be safely communicated between the first node 100 and first wireless device 200 without interference from other (e.g. nefarious) entities.

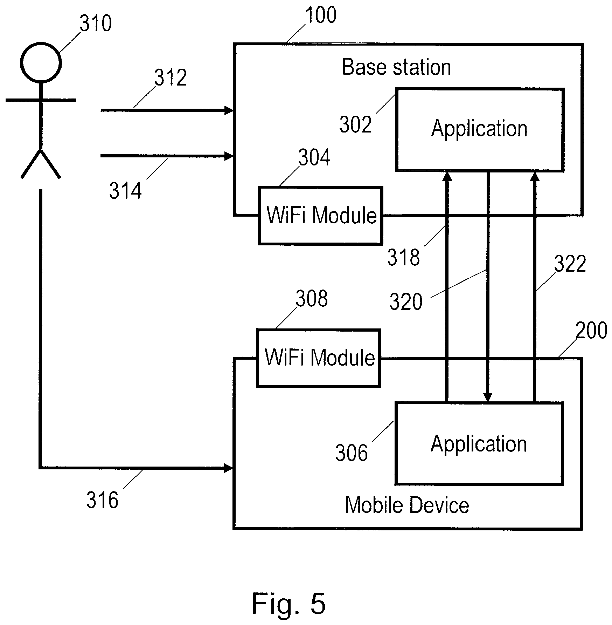

**Figure 5** is a block diagram illustrating a method performed in a system (e.g. a network) according to an embodiment. As illustrated in Figure 5, the system can comprise a first node 100 ("Base station"), as referred to herein, and a first wireless device 200 ("Mobile Device"), as referred to herein. Although not illustrated in Fig. 5, the first node 100 and the first wireless device 200 can be deployed at an emergency response incident (e.g. a building fire). As illustrated in Fig. 5, in some examples, communication between the first node 100 and the first wireless device 200 may be direct. For example, the communication path between the first node 100 and the first wireless device 200, as described herein, may not involve an intermediate entity.

As mentioned herein, and as illustrated by blocks 304 and 308, the first node 100 and the first wireless device 200, respectively, can comprise a communications interface. As illustrated in Fig. 5, in some examples, the communication interface of the first node 100 and the first wireless device may comprise a WiFi module. As such, in some examples, the first node 100 and the first wireless device 200 may communicate via a WiFi network. As also mentioned herein, and as illustrated in Fig. 5, the first node 100 may run a first application 302, and/or the first wireless device 200 may run a second application 306. The first application 302 may be referred to herein as the application (app) running on the first node 100. Similarly, the second application 306 may be referred to herein as the application (app) running on the first wireless device 200. The first application 302 may be associated with the second application 306. For example, the first application 302 may be the same application as the second application 306. In some examples, the first application 302 and the second application 306 may be from the same source. In some examples, the second application 306 may be configured to communicate (e.g. be linked with) with a single base station (e.g. the first node 100 in examples in which the first node 100 is a base station).

As mentioned herein, the first node 100 may power on in response to obtaining a second input. The first node 100 may set the state of the first node 100 to the first state, as defined herein, in response to powering on. As illustrated by arrow 312 of Fig. 5, the second input may comprise obtaining the second input from a user 310. In some examples, receiving the second input may comprise a (e.g. power) button being actuated on the first node 100 (e.g. by the user 310). Setting the state of the first node 100 to the first state may comprise initialising the WiFi module of the first node 100. Initialising the WiFi module of the first node 100 may comprise, for example, initialising a WiFi network via the WiFi module of the first node 100. In these examples, the WiFi module of the first node 100 (e.g. while in the first state) may be initialised to prevent any connection to a wireless device while the first node 100 is in the first state.

As also mentioned herein, the first node 100 changes the state of the first node 100 from the first state to the second state, as defined herein, in response to obtaining a first input. As illustrated by arrow 314 of Fig. 5, in some examples, obtaining the first input may comprise obtaining the first input from the user 310. In some examples, receiving the second input may comprise a (e.g. connect) button being actuated on the first node 100 (e.g. by the user 310). Changing the state of the first node 100 from the first state to the second state may comprise (re)configuring the WiFi module of the first node 100. In these examples, the WiFi module of the first node 100 (e.g. while in the first state) may be (re)configured to allow the first node 100 to connect to a wireless device (e.g. the first wireless device 200). Configuring the WiFi module of the first node 100 may comprise configuring a WiFi network of the WiFi module to allow the first node 100 to connect to a wireless device. In these examples, the WiFi network may become visible (e.g. accessible) to one or more wireless devices (e.g. the first wireless device) when the state of the first node 100 is the second state.

As illustrated by arrow 316 of Fig. 5, in some examples, the first wireless device 200 may be powered on by the user 310 (e.g. by actuating a power button of the first wireless device 200). As illustrated by arrow 318 of Fig. 5, the first wireless device 200 (e.g. the second application 306 of the first wireless device 200) may initiate transmission of a first request, as defined herein, towards the first node 100 (e.g. the first application 302 of the first node 100). As such, the first node 100 (e.g. the first application 302 of the first node 100) can receive the first request from the first wireless device 200 (e.g. the second application 306 of the first wireless device 200). As illustrated by arrow 320 of Fig. 5, the first node 100 (e.g. the first application 302 of the first node 100) may initiate transmission of a first response, as defined herein, towards the (e.g. the second application 306 of the first wireless device 200). As such, the (e.g. the second application 306 of the first wireless device 200) can receive the first response from the first node 100 (e.g. the first application 302 of the first node 100). As illustrated by arrow 322 of Fig. 5, the (e.g. the second application 306 of the first wireless device 200) may initiate transmission of a second request, as defined herein, towards the first node 100 (e.g. the first application 302 of the first node 100). Thus, the first node 100 (e.g. the first application 302 of the first node 100) may receive the second request from the (e.g. the second application 306 of the first wireless device 200). As mentioned herein, the second request is a request for the first wireless device 200 to connect to the first node 100.

Although not explicitly illustrated in Fig. 5, in response to receiving the second request, the (e.g. first application 302 of the) first node 100 initiates a one-to-one connection to the first wireless device and changes the state of the first node from the second state to the first state, as defined herein. The one-to-one connection can be initiated prior to changing the state of the first node from the second state to the first state, according to some examples. As such, authorisation of the first wireless device 200 by the first node 100 can be completed.

In some examples, the first node 100 may configure itself to allow connection to the first wireless device 200 (e.g. and no other wireless devices). As mentioned herein, in some examples, the second request can comprise an identifier of the first wireless device 200. Thus, the first node 100 may store the identifier of the first wireless device 200. Alternatively, or inaddition, the first node 100 may configure the communications interface 108 of the first node 100 to communicate with the first wireless device 200 only, based on the identifier of the first wireless device 200. For example, the first node 100 can configure the WiFi module of the first node 100 to allow only communications associated with the MAC address of the first wireless device 200.

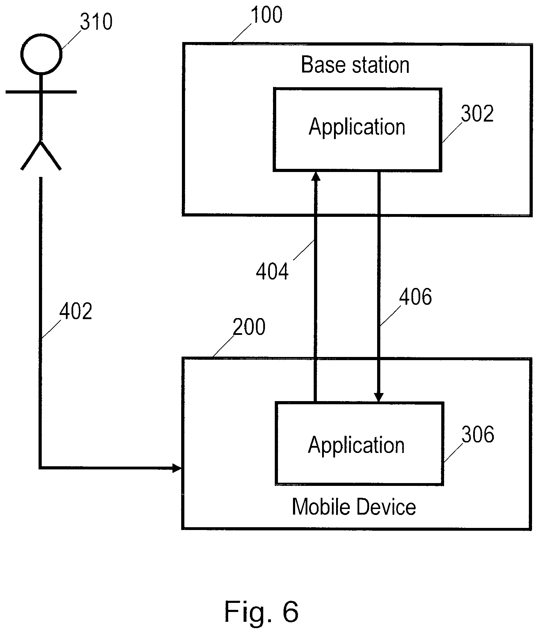

**Fig. 6** is a block diagram illustrating a method performed in a system (e.g. a network) according to an embodiment. The system illustrated in Fig. 6 can be as described with reference to the system of Fig. 5.

As illustrated by arrow 402 of Fig. 6, the second application 306 may be initiated (e.g. by the user 310 via a user interface of the first wireless device 200). For example, the user 310 may select the second application 306 via a touch screen interface of the first wireless device 200. Although not explicitly illustrated in Fig. 6, the first wireless device 200 (e.g. the second application 306) may generate an identifier of the first wireless device 200, as defined herein. The identifier of the first wireless device 200 may be a unique identifier (e.g. to the first wireless device 200). For example, the identifier of the first wireless device 200 can comprise a MAC identifier as described herein.

Alternatively, or in addition, the identifier for the first wireless device 200 can comprise a hash, as defined herein. The first wireless device 200 may generate the identifier of the first wireless device 200 in response to the second application 306 being initiated. In some examples, the first wireless device 200 may retrieve the (e.g. previously generated) identifier of the first wireless device 200 from a memory 204 of the first wireless device 200. In these examples, the identifier of the first wireless device 200 may be generated prior to the initiation of the second application 306 as illustrated by arrow 402 of Fig. 6.

In some examples, the identifier of the first wireless device 200 may be generated if the first wireless device 200 (e.g. the second application 306) is not yet authorised to communicate with the first node 100 (e.g. the first application 302). For example, if the first wireless device 200 has not performed an authorisation process with the first node 100, then the wireless device 200 may (e.g. automatically) generate the identifier of the first wireless device 200, as described herein.

As illustrated by arrow 404 of Fig. 6, the first wireless device 200 (e.g. the second application 306) may initiate transmission of a second request, as defined herein, towards the first node 100 (e.g. the first application 302). Thus, the first node 100 (e.g. first application 302) can receive the second request from the first wireless device 200 (e.g. the second application 306). The second request can comprise the identifier of the first wireless device 200. As such, in some examples, the first wireless device 200 may register the identifier of the first wireless device 200 with the first node 100. Thus, the second request may be referred to herein as a "registration request".

Although not explicitly illustrated in Fig. 6, in some examples, the (e.g. first application 302 of the) first node 100 may accept the second request and/or accept (e.g. validate) the identifier of the first wireless device 200. The (e.g. first application 302 of the) first node 100 may store the identifier of the first wireless device 200 (e.g. in the memory 104 of the first node 100). As such, the first node 100 may register the first wireless device 200 at the first node 100. As illustrated by arrow 406 of Fig. 6, the first node 100 (e.g. the first application 302 of the first node 100) may initiate transmission of a second response towards the first wireless device 200. Thus, the first wireless device 200 (e.g. the second application 306 of the first wireless device 200) can receive the second response from the first node 100. The second response can comprise second information indicative that the identifier of the first wireless device 200 has been accepted. As such, in some examples, the first node 100 can notify the first wireless device 200 that the identifier of the first wireless device 200 has been accepted.

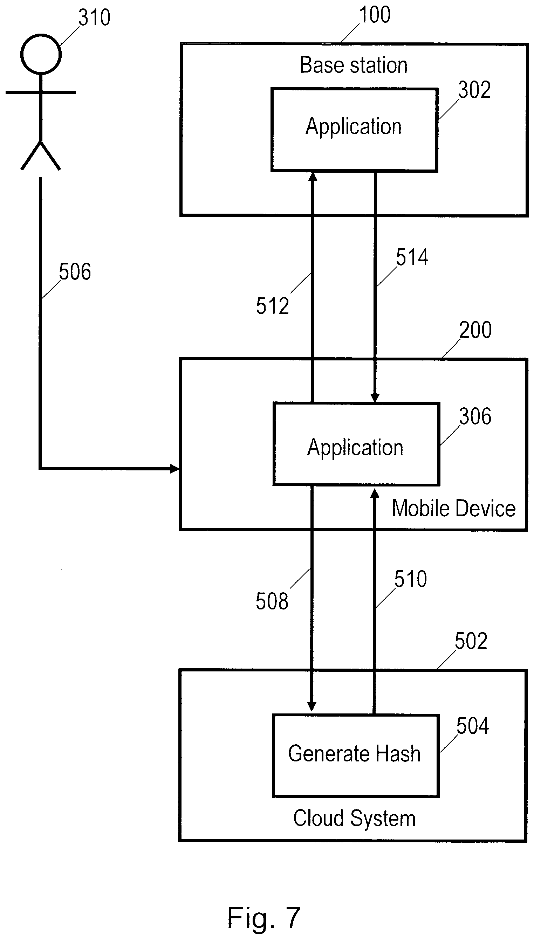

**Fig. 7** is a block diagram illustrating a method performed in a system (e.g. a network) according to an embodiment. The system illustrated in Fig. 6 can be as described with reference to the system of Figs. 5 and 6 with the exception that the example system illustrated in Fig. 7 comprises a cloud entity 502 ("Cloud System"). The cloud entity 502 can be (e.g. a node) of the network as referred to herein. As illustrated in Fig. 7, in some examples, the first wireless device 200 can communicate wirelessly with the cloud entity 502. Although not illustrated in Fig. 7, it will be understood that, in some examples, the first node 100 can be configured to communicate (e.g. directly) with the cloud entity 502.

The method step illustrated by arrow 506 of Fig. 7 can be as described with reference to arrow 402 of Fig. 6.

As illustrated by arrow 508 of Fig. 7, the first wireless device 200 (e.g. the second application of the first wireless device 200) may initiate transmission of a third request towards the cloud entity 502. Thus, the cloud entity 502 can receive the third request from the first wireless device 200. The third request can be a request for the cloud entity 502 to generate the identifier of the first wireless device 200, as referred to herein. As such, in some examples, the cloud entity 502 can generate the identifier of the first wireless device 200. The third request may be referred to herein as a request to register with the cloud system.

Therefore, in some examples, the cloud entity 502 (e.g. cloud system) can be used to authorise and/or register the second application 306 (e.g. running on the first wireless device 200). As such, the cloud entity 502 can ensure that the software of the (e.g. second application 306 of the) first wireless device 200 is of correct origin. After the second application 306 is initiated (e.g. for the first time), as described with reference to arrow 506 of Fig. 7, the second application 306 may guide the user 310 (e.g. via a user interface 206 of the first wireless device 200) through a process of registering the first wireless device 200, and/or the second application 306, to the cloud entity 502 (e.g. cloud system). For example, the second application 306 may generate an (e.g. visual) output requesting that the user 310 log into the cloud entity 502 (e.g. cloud system). In some examples, in response to a successful user login, transmission of the third request, as defined herein, may be initiated towards the cloud entity 502.

As illustrated by arrow 510 of Fig. 7, the cloud entity 502 can initiate transmission of a third response towards the first wireless device 200 (e.g. the second application 306 of the first wireless device 200). Thus, in some examples, the first wireless device 200 can receive the third response from the cloud entity 502. The third response can comprise the identifier of the first wireless device 200, as defined herein. As illustrated by block 504 of Fig. 7, in some examples the cloud entity 502 can generate (e.g. output) the identifier of the first wireless device 200 (e.g. a hash). The identifier may be referred to herein as a token. The identifier (e.g. token) can be used by the first wireless device 200 (e.g. second application 306) for request(s) (e.g. the second request defined herein) towards the first node 100. In some examples, the identifier of the first wireless device 200 may be specific to the second application 306. In these examples, the identifier of the first wireless device 200 may be referred to as an "application token".

As illustrated by arrow 512 of Fig. 7, the first wireless device 200 (e.g. the second application 306) may initiate transmission of a second request, as defined herein, towards the first node 100 (e.g. the first application 302). Thus, the first node 100 (e.g. first application 302) can receive the second request from the first wireless device 200 (e.g. second application 306). The second request can comprise the identifier of the first wireless device 200, as defined herein. As such, in some examples, such as that illustrated in Fig. 7, the second request can comprise the token generated by the cloud entity 502.

Although not explicitly illustrated in Fig. 6, in some examples, the (e.g. first application 302 of the) first node 100 may decode the identifier of the first wireless device 200 (e.g. the token generated by the cloud entity 502). Other information may be encoded into the token generated by the cloud entity 502. For example, the token may comprise license information and/or information indicative of licensed features (e.g. that should be enabled on the second application 306). The information comprised in the token can be used by the first node 100 to validate and/or authorise the first wireless device 200 (e.g. the second application 306) as a trusted source. For example, the token can be verified, by the first node 100, as generated by the cloud entity 502. In some examples, the information comprised in the token can be used by the first node 100 as a means of enabling and/or disabling certain functionality and/or capabilities of the system. For example, the first node 100 can determine, based on the token, which functionalities and/or capabilities to provide (e.g. enable) to the first wireless device 200.

Although not explicitly illustrated in Fig. 7, in some examples the first node 100 can accept the second request and/or accept (e.g. validate) the identifier (e.g. token) of the first wireless device 200. The (e.g. first application 302 of the) first node 100 may store the identifier (e.g. token) of the first wireless device 200 (e.g. in the memory 104 of the first node 100). As such, the first node 100 may register the first wireless device 200 at the first node 100 according to some examples. As illustrated by arrow 514 of Fig. 7, the first node 100 (e.g. the first application 302 of the first node 100) may initiate transmission of a second response towards the first wireless device 200. Thus, the first wireless device 200 (e.g. the second application 306 of the first wireless device 200) can receive the second response from the first node 100. The second response can comprise second information indicative that the identifier of the first wireless device 200 (e.g. token) has been accepted. As such, in some examples, the first node 100 can notify the first wireless device 200 that the identifier of the first wireless device 200 has been accepted. In some examples, the third request, as defined herein, may only be initiated after the first response, as defined herein, is received by the first wireless device 200. For example, to utilise the cloud entity 502 authorisation process as described with reference to Fig. 7, the first wireless device 200 may first need to receive the first response, as defined herein.

Although Fig. 7 illustrates an example system comprising the cloud entity 502, it will be understood that the system may not comprise the cloud entity according to other examples.

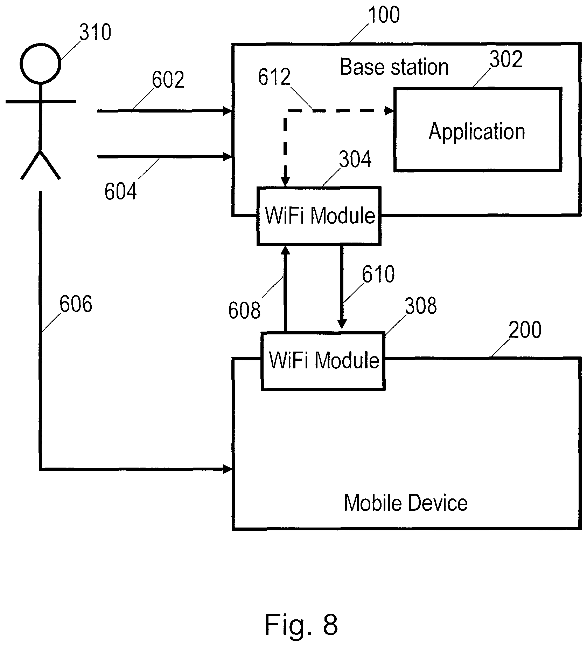

**Fig. 8** is a block diagram illustrating a method performed in a system (e.g. a network) according to an embodiment. The system illustrated in Fig. 8 can be as described with reference to the system of Figs. 5 and 6.

The method steps illustrated with respect to arrows 602, 604 and 606 of Fig. 8 can be as described with reference to arrows 312, 314 and 316 of Fig. 5, respectively.

As mentioned herein, in response to receiving a second request from the first wireless device 200, as defined herein, the first node 100 initiates a one-to-one connection to the first wireless device 200. As illustrated by arrow 608, in some examples, the first wireless device 200 (e.g. the WiFi module of the first wireless device 200) may initiate transmission of a notification message towards the first node 100 (e.g. the WiFi module of the first node 100). Thus, the first node 100 (e.g. the WiFi module of the first node 100) can receive the notification message from the first wireless device 200 (e.g. the WiFi module of the first wireless device 200). The notification message can comprise information indicative that the first wireless device 200 has initiated the one-to-one connection with the first node 100. As illustrated by arrow 612 of Fig. 8, in some examples, the WiFi module of the first node 100 can notify the first application 302 of the connection initiation. The first node 100 (e.g. the first application 302 of the first node 100) can (re)configure the WiFi module of the first node 100 based on the identifier of the first wireless device 200, as defined herein.

As illustrated by arrow 610 of Fig. 8, the first node 100 (e.g. the WiFi module of the first node 100) can initiate transmission of a confirmation message towards the first wireless device 200 (e.g. the WiFi module of the first wireless device 200).

There is also provided a computer program comprising instructions which, when executed by processing circuitry (such as the processing circuitry 102 of the first node 100 described herein and/or the processing circuitry 202 of the first wireless device 200 described herein), cause the processing circuitry to perform at least part of the method described herein. There is provided a computer program product, embodied on a non-transitory machine-readable medium, comprising instructions which are executable by processing circuitry (such as the processing circuitry 102 of the first node 100 described herein and/or the processing circuitry 202 of the first wireless device 200 described herein) to cause the processing circuitry to perform at least part of the method described herein. There is provided a computer program product comprising a carrier containing instructions for causing processing circuitry (such as the processing circuitry 102 of the first node 100 described herein and/or the processing circuitry 202 of the first wireless device 200 described herein) to perform at least part of the method described herein. In some embodiments, the carrier can be any one of an electronic signal, an optical signal, an electromagnetic signal, an electrical signal, a radio signal, a microwave signal, or a computer-readable storage medium.

The techniques described herein facilitate the improved (e.g. multilayer) configuration between a first node 100 and a first wireless device 200 of a network. That is, the techniques described herein provide for the authentication of the first wireless device 200 by the first node 100 to enable a one-to-one connection between the first wireless device 200 and the first node 100. As a result, the first node 100 and the first wireless device 200 can communicate securely and avoid the risk of malicious or unauthorised devices interfering with the functionality of the first node 100. This is especially advantageous given that the first node is deployed at an emergency response incident.

Indeed, in some examples, the first node 100 can be configured to act as a transceiver between apparatus deployed at an incident and the first wireless device 200. In some of these examples, the first wireless device 200 can be configured to manage (e.g. orchestrate) the incident via the first node 100. As such, the techniques described herein can be usefully utilised to prevent a nefarious and/or unauthorised device from interfering with the management of the incident at which the first node 100 and first wireless device 200 are deployed. Therefore, the techniques described herein can be usefully used to prevent an attacker from gaining access to the first node 100.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for handling connection requests in a network, wherein the method is performed by a first node (100) of the network, and wherein the first node (100) is deployed at an emergency response incident, the method comprising:
in response to obtaining a first input, changing (110) a state of the first node (100) from a first state to a second state, wherein:
in the first state, the first node (100) is unable to initiate a connection to a wireless device; and
in the second state, the first node (100) is able to initiate a one-to-one connection to a wireless device;
receiving (112, 318), from a first wireless device (200) deployed at the emergency response incident, a first request for information indicative of the state of the first node (100);
initiating (114, 320) transmission of a first response towards the first wireless device (200), wherein the first response comprises first information indicative that the state of the first node (100) is the second state; and
in response to receiving a second request from the first wireless device (200),
wherein the second request is a request for the first wireless device (200) to connect to the first node:
initiating (116) a one-to-one connection to the first wireless device (200); and
changing (118) the state of the first node (100) from the second state to the first state.

2. The method as claimed in claim 1, wherein the first input is obtained via a user interface of the first node (100).

3. The method as claimed in claim 1 or 2, wherein the method comprises:
starting a timer in response to obtaining the first input, wherein the one-to-one connection to the first wireless device (200) is only initiated if the second request is received before the timer elapses.

4. The method as claimed in claim 3, wherein, if the timer elapses before the second request is received, the method comprises:
truncating the method to omit the step of initiating (116) the one-to-one connection to the first wireless device (200).

5. The method as claimed in any of the preceding claims, wherein the second request comprises an identifier of the first wireless device (200).

6. The method as claimed in claim 5, wherein the identifier is generated by:
the first wireless device (200); or
a cloud entity (502).

7. The method as claimed in claim 5 or 6, wherein initiating the one-to-one connection to the first wireless device (200) comprises:
storing the identifier; and
initiating (514) transmission of a second response towards the first wireless device (200), wherein the second response comprises second information indicative that the identifier of the first wireless device (200) has been accepted.

8. The method as claimed in any of the preceding claims, the method comprising:
powering on in response to obtaining a second input; and
setting the state of the first node (100) to the first state in response to powering on.

9. A method for handling connection requests in a network, wherein the method is performed by a first wireless device (200) deployed at an emergency response incident, the method comprising:
initiating (210) transmission of a first request towards a first node (100) of a network, wherein the first request is a request for information indicative of a state of the first node (100), and wherein the first node (100) is deployed at the emergency response incident;
receiving (212), from the first node (100), a first response comprising first information indicative that the state of the first node (100) is a second state in which the first node (100) is able to initiate a one-to-one connection to a wireless device;
in response to receiving the first response from the first node (100), initiating (214) transmission of a second request towards the first node (100), wherein the second request is a request for the first wireless device (200) to connect to the first node (100).

10. The method as claimed in claim 9, wherein the second request comprises an identifier of the first wireless device (200), the method comprising:
initiating (508) transmission of a third request towards a cloud entity (502),
wherein the third request is a request for the cloud entity (502) to generate the identifier; and
receiving (510) a third response from the cloud entity (502), wherein the third response comprises the identifier.

11. The method as claimed in claim 9 or 10, the method comprising:
receiving (406) a second response from the first node (100), wherein the second response comprises second information indicative that the identifier of the first wireless device (200) has been accepted.

12. The method as claimed in any of the preceding claims, wherein the first node (100) is configured to transmit third information towards the first wireless device (200), wherein the third information is received from one or more breathing apparatus deployed at the emergency response incident.

13. A first node (100) comprising:
processing circuitry (102) configured to operate in accordance with any of claims 1 to 8, and/or claim 12 when dependent on any of claims 1 to 8.

14. A first wireless device (200) comprising:
processing circuitry (202) configured to operate in accordance with any of claims 9 to 11, and/or claim 12 when dependent on any of claims 9 to 11.

15. A computer program product, embodied on a non-transitory machine-readable medium, comprising instructions which are executable by processing circuitry to cause the processing circuitry to perform the method according to:
any of claims 1 to 8, and/or claim 12 when dependent on any of claims 1 to 8; and/or
any of claims 9 to 11, and/or claim 12 when dependent on any of claims 9 to 11.
